# EUROPEAN PATENT APPLICATION

(11) **EP 3 506 328 A1**
(43) Date of publication of application: **03.07.2019**
(21) Application number: 18213701.8
(22) Date of filing: 18.12.2018
(51) Int. Cl.: H01H 3/20, F24C 3/12, A47J 37/00, F24C 7/08, G05G 1/12, H05B 6/12, H05B 6/64

(54) **A COOKING APPLIANCE HAVING A CONTROL KNOB**

(30) Priority: 27.12.2017 TR 201722038
(71) Applicant: BSH Hausgeräte GmbH, 81739 München (DE)
(72) Inventor: ilke, Yunus Emre, TEKIRDAG (TR); Kenar, Serdar, 59600 TEKIRDAG (TR); Mert, Mustafa, 59600 TEKIRDAG (TR); Yavuz, Serhat, 59850 TEKIRDAG (TR)

(57) **Abstract**

The present invention proposes a cooking appliance (100) comprising a body (30), a control panel (40) provided on the body (30), a switch (50) for adjusting a power level of a heat source, the switch (50) comprising a shaft (60) extending through the control panel (40) and a control knob (70) connected to the shaft (60) for rotating the shaft, wherein said control knob (70) comprising an essentially hollow outer body (1) having an inner face, and an inner body (2) which is at least partly positioned inside the outer body (1) and wherein said outer body (1) is freely rotatable relative to the inner body (2) at a locked first position of the control knob (70). As an improvement, the inner body (2) being provided with a gear element (27) having a plurality of teeth (271), the inner face of the outer body (1) being provided with one or more coupling means (3) and each coupling means (3) is shaped and sized to engage with and be guided by corresponding gaps provided between adjacent teeth of the gear element (27) at an unlocked second position so that the outer body (1) and inner body (2) rotate together, when the outer body (1) is pushed and rotated at a potential engaging position.

## Description

### Technical field of the invention

The present invention relates to a cooking appliance according to the preamble of claim 1.

### Background of the invention

Child safety is a highly important issue in arrangement of technical features at designing cooking appliances. Status of an ordinary cooking appliance can be easily altered merely by rotating a control knob controlling the appliance. Unintentionally rotating such control knob can result in gas leakage into living spaces, and cause severe consequences including intoxication, fire and even explosions.

Cooking appliances with basic push-to-engage control knobs are also available in the market, yet generally they can be manipulated merely by pushing the knob and then rotating it at certain potential engagement position(s) of the control knob. In the case where such control knob is not already in its engagement position, pushing it would not result in engagement between corresponding parts of the control knob and the control knob would not function. Such situations may result in application of force over the mechanical strength of the material which is used in forming delicate parts of the knob, and therefore the control knob may be mechanically damaged by the user without being able to achieve coupling between said parts.

Also the functional state of a cooking appliance cannot be visually or tactually detected due to respective parts of the control knob being optically hidden from the outside thereof. This is especially the case for users with visual impairment. Therefore it is generally difficult for such users, to use the cooking appliance by themselves. More particularly, the status of such cooking appliances cannot be easily checked by individuals having advanced visual impairment merely over its control knob, and it is generally required feel e.g. by hand whether the range is already in a hot state or not. This issue further causes total loss of safety in the kitchen.

Hence, it is desirable to improve the cooking appliances considering the abovementioned shortcomings.

The push-to-engage device, disclosed in the patent application US3986409, comprises a hollow knob having axially disposed therein an independent bushing provided with a fastener for bindingly engaging an inserted end portion of a rotatable shaft and with a plurality of recesses disposed for engagement with keys protruding inwardly from the knob, and an external resilient device coupled to the knob for positioning the keys in spaced relationship with the recesses in the bushing.

### Objects of the invention

Primary object of the present invention is to overcome the abovementioned shortcomings encountered in the prior art.

Another object of the present invention is to provide a cooking appliance with increased ease of use for adult users, without compromising child safety.

Another object of the present invention is to provide a cooking appliance with increased ease of use for visually impaired adult users.

Another object of the present invention is to provide a cooking appliance, the status of which can be easily followed through sense organs.

### Summary of the invention

The present invention proposes a cooking appliance comprising a body, a control panel, a switch for adjusting a power level of a heat source, the switch comprising a shaft extending through the control panel and a control knob connected to the shaft for rotating the shaft, wherein said control knob comprising an essentially hollow outer body having an inner face, and an inner body which is at least partly positioned inside the outer body and wherein said outer body is freely rotatable relative to the inner body at a locked first position of the control knob. As an improvement, the inner body being provided with a gear element having a plurality of teeth, the inner face of the outer body being provided with one or more coupling means and each coupling means is shaped and sized to engage with and be guided by corresponding gaps provided between adjacent teeth of the gear element at an unlocked second position so that the outer body and inner body rotate together, when the outer body is pushed and rotated at a potential engaging position. Thus, the enhanced safety of the cooking appliance over the control knob, especially for the young children, is achieved.

Here, shape of the coupling means can be e.g. a protrusion towards a primary axis of rotation of the outer body as shown in the figures and in such case, a guide to cooperate such coupling means can be in the shape of the gap provided between adjacent teeth of the gear element to receive and guide the coupling means. Yet, any other suitable sizes and shapes to fulfill the above explained functional limitation can be apply, therefore the invention is not to be limited to the examples given in the description and figures. The term 'sized and shaped' in the rest of the description is to be evaluated mutatis mutandis.

Here, "the locked first position" means the user does not change the power level of the heat source of the cooking appliance by this status of the control knob and reversibly, "the unlocked second position" means the user can change the power level of the heat source by this status of the control knob of the cooking appliance.

Here, "the potential engaging position" means, engaging of the coupling means to the corresponding gap at the potential position of the control knob.

In a probable embodiment of the invention, a first spring element is provided between the outer body and inner body so that the outer body is reversibly movable relative to the inner body between the locked first position and unlocked second position by manipulating against force of the first spring element. Thus, an axial movement of the outer body relative to the inner body between the locked first position and the unlocked second position by manipulating against force is provided. Here, the first spring element can be e.g. a spring, in particular a compression spring.

In a probable embodiment of the invention, the outer body is provided with at least one blocking means for blocking an axial movement of the outer body, when the outer body moved in a direction away from the control panel. Thus, the axial movement of the outer body is blocked, when the outer body is moved in the direction away from the control panel. Therefore, a disengagement of the inner body and outer body is prevented.

In a probable embodiment of the invention, the blocking means is provided inside the outer body and said blocking means comprises at least one blocking protrusion abutting a wall of the inner body at an end position in the direction away from the control panel. Thus, the axial movement of the outer body is blocked by abutting the wall of the inner body.

In a probable embodiment of the invention, the inner body has a slot, which corresponds with the blocking means to rotate said blocking means freely inside the slot, when the outer body is rotated at the locked first position. Thus, the blocking means are rotated freely inside the slot, when the outer body is rotated by the user at the locked first position.

In a probable embodiment of the invention, the inner body has a shaft connection housing and wherein a second spring element is positioned inside said shaft connection housing for fixing the shaft to the shaft connection housing in a tightened manner. Thus, uncontrolled separation of the inner body from the shaft is prevented. Here, the second spring element can be e.g. a spring, in particular a leaf spring.

In a probable embodiment of the invention, the control knob that is rotatable around a primary axis, comprises an indicator extending to a radial distance from said primary axis and wherein said distance being equal to or greater than that between the primary axis and an outer face of the outer body. Thus, visual and optionally tactual sensing of momentary positions of the indicator enables further facilitated detection of the status of the control knob (and thus of the cooking appliance) followed through (optionally multiple) sense organs. Tactual sensing of the position of the indicator also enables the status control of the cooking appliance merely over the control knob by individuals having advanced visual impairment.

In a probable embodiment of the invention, the inner body has a circumferential skirt part secured to or integral with the inner body and wherein the skirt part at least partly surrounds the outer side face of the outer body.

In a probable embodiment of the invention, an indicator is provided on an outer face of the skirt part of the inner body. Thus, the user can see the indicator easily.

In a probable embodiment of the invention, the outer body has a circumferential skirt provided on an end of the outer body and wherein said skirt at least partly fills a gap between the outer body and control panel, when the outer body is pushed towards the control panel. Thus, the gap provided between the outer body and control panel to provide a distance for pushing the outer body does not disturbs the users.

### Brief description of the figures

The accompanying drawings are given solely for the purpose of exemplifying the invention whose advantages over prior art were outlined above and will be explained in detail hereinafter:
Fig. 1 shows a perspective view of an exemplary cooking appliance according to the present invention.
Fig. 2 demonstrates an exploded view of an exemplary control knob embodiment in a cooking appliance according to the present invention.
Fig. 3 demonstrates a longitudinal section view (perspective) of the control knob shown in the Fig. 2 upon assembly thereof.
Fig. 4 shows demonstrates another longitudinal section view of the control knob shown in the Fig. 2 upon assembly thereof.
Fig. 5 shows a rear view of an exemplary outer body to be employed in an embodiment according to the present invention, the section being perpendicular to the primary axis.
Fig. 6 demonstrates coupling alignment between the inner body and outer body of an exemplary control knob to be employed in a cooking appliance according to the present invention, over a section view as explained for the Fig. 5.
Fig. 7 shows an exploded view of a second exemplary control knob embodiment in a cooking appliance according to the present invention.
Fig. 8 shows longitudinal cross section of a perspective view of a second exemplary control knob embodiment in a cooking appliance according to the present invention, wherein an uncompressed state of the first spring element is emphasized for a case without coupling between the inner body and outer body (locked first position).
Fig. 9 shows longitudinal cross section of a perspective view of a second exemplary control knob embodiment in a cooking appliance according to the present invention, wherein a compressed state of the first spring element is emphasized for a case with coupling between the inner body and outer body (unlocked second position).

### Detailed description of the invention

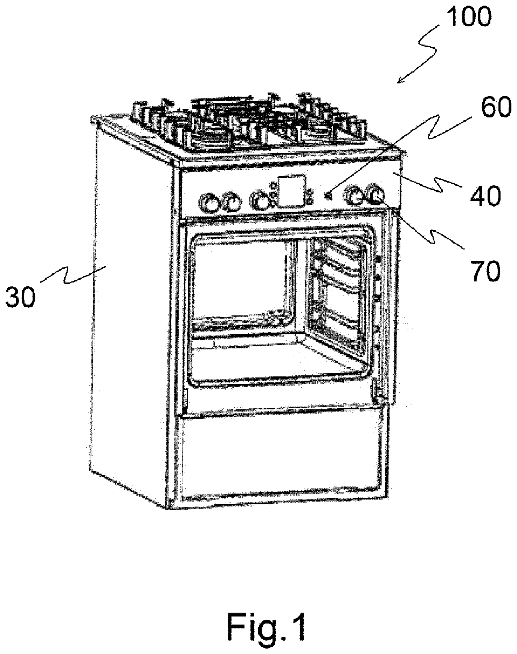

Referring to the figures summarized above, the present invention proposes a cooking appliance (100) comprising a push-to-engage control knob (70). The cooking appliance including the control knob (70) is exemplified in Fig.1.

Referring to Fig.1, the subject matter cooking appliance (100) comprises a body (30) and a control panel (40) provided on a front side of the cooking appliance (100). There is shaft (60) extending through the control panel (40). There is a control knob (70) connected to said shaft (60) for rotating the shaft.

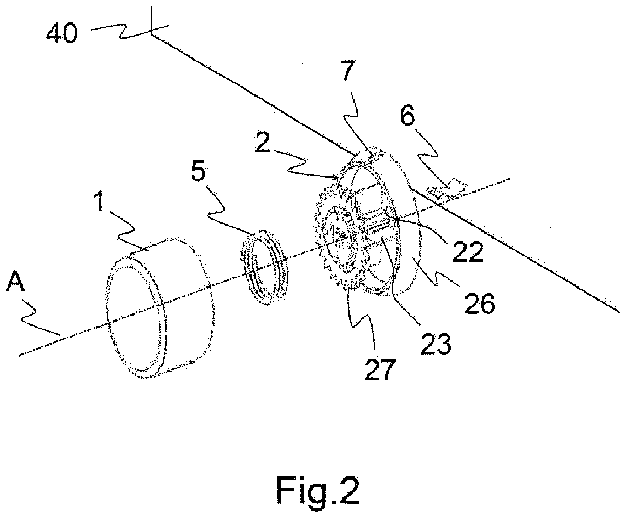

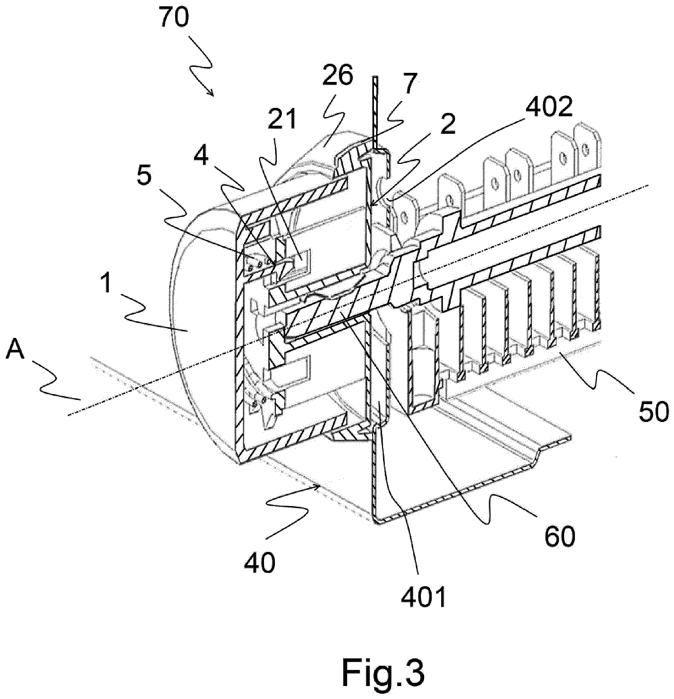

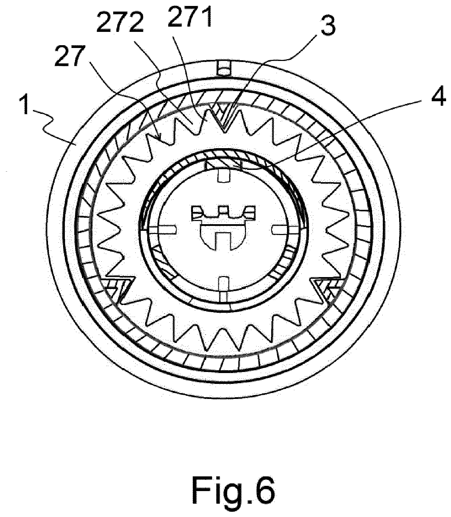

Referring to Fig.2 and Fig.3, there is a switch (50) for adjusting a power level of a heat source. The switch (50) has a body part positioned at a rear side of the control panel (40). The control panel (40) has at least one hole (402), and at least one mounting member (e.g. a screw) passes through said hole (402) for fixing the switch (50) to the control panel (40). There is a groove (401) is provided on the control panel (40) in a manner corresponding the control knob (70). The exemplary first embodiment of the control knob (70) comprises an essentially hollow outer body (1) having an inner face (13), and an inner body (2) which is at least partly positioned inside the outer body (1). A first spring element (5) provided between the outer body (1) and inner body (2). Both of the outer body (1) and inner body (2) are in communication with said first spring element (5) so that the outer body (1) is reversibly movable relative to the inner body (2) between a locked first position and an unlocked second position of the control knob (70) by manipulating against force of the first spring element (5). A second spring element (6) is positioned inside the inner body (2) for fixing the shaft (60) to the inner body (2) in a tightened manner. The inner face (13) of the outer body (1) is being provided with one or more coupling means (3) protruding towards a primary axis (A) of rotation of the outer body (1). In a possible embodiment, the outer body (1) has a hollow cylindrical shape and the coupling means are embodied inside said outer body (1). In more details, the inner face (13) and an outer face of the outer body (1) both surrounds the primary axis (A) and the control knob (70) is rotatable around said primary axis (A). The inner body (2) is being provided with a gear element (27) having a plurality of teeth (271) surrounding the primary axis (A). The gear element (27) of the inner body (2) is secured thereto or provided integral with the inner body (2). Furthermore, the inner body (2) has a groove part (22) and at least one support protrusion (23), supporting the gear element (27). The support protrusion (23) is provided inside said groove part (22) of the inner body (2). Each coupling means (3) is shaped and sized to engage with and be guided by corresponding gaps (272), provided between adjacent teeth of the gear element (27) at the unlocked second position (see exemplary Fig.6) so that the outer body (1) and inner body (2) rotate together, when the outer body (1) is pushed and rotated. Said coupling means (3) disengage from the corresponding gaps (272) at the locked first position so that the outer body (1) is freely rotatable relative to the inner body (2). This set of features enables the engagement between the inner body (2) and the outer body (1) in multiple rotational positions around the primary axis (A), thereby facilitating the push-to-engage function of the control knob (70). The set of features above provides multiple potential engagement positions between the outer body (1) and inner body (2), since the coupling means (3) and gaps (272) are aligned with each other for coupling and allowing transition between the locked first position and unlocked second position at a plurality of rotational positions relative to each other.

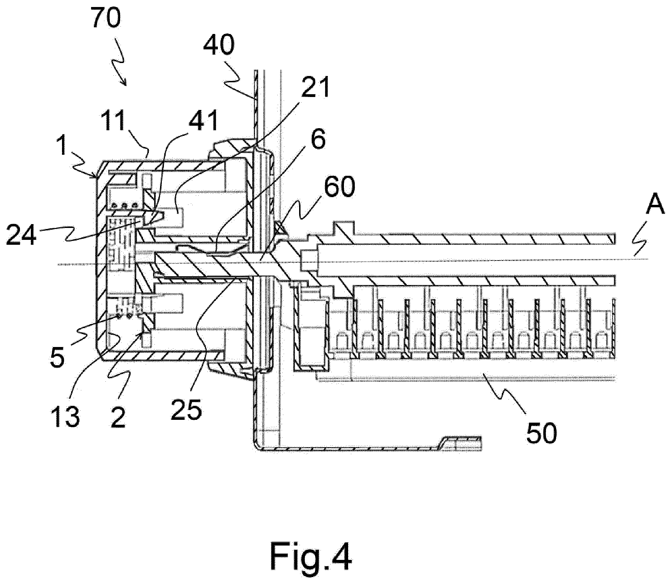

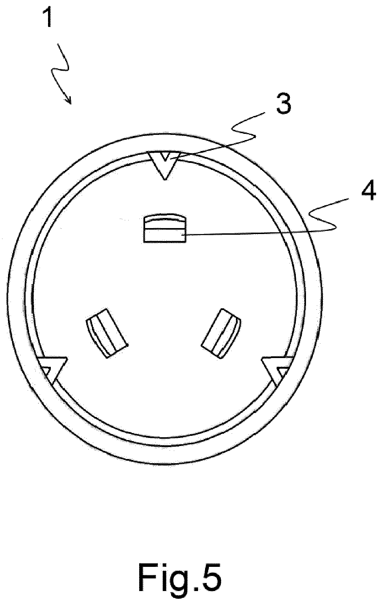

Referring to Fig. 4, the outer body (1) of the exemplary first embodiment of the control knob (70) has one or more blocking means (4) embodied on the inner face (13) of the outer body (1) so as to extend in a direction of the primary axis (A). In a possible embodiment of the invention, the outer body (1) has three coupling means (3) and three blocking means (4) protruding in the direction of the primary axis (A). Said blocking means (4) comprises at least one blocking protrusion (41) abutting a wall (24) of the inner body (2) at an end position in the direction away from the control panel (40). In more details, said blocking protrusions (41) of the outer body (1) are provided for blocking an axial movement of the outer body (1), when the outer body (1) moved in a direction away from the control panel (40). On the other hand, the inner body (2) has a shaft connection housing (25) and the second spring element (6) is positioned inside said shaft connection housing (25) for fixing the shaft (60) to the shaft connection housing (25) in a tightened manner. When the shaft (60) is placed into the shaft connection housing (25), the second spring element (6) provides the inner body (2) to be fixed onto the shaft (60). In other words, uncontrolled separation of the inner body (2) from the shaft (60) is prevented. The initial assembly between the inner body (2) and outer body (1) can be achieved via snap-fit connection through e.g. one or more blocking means-slot (4, 21) couples between the outer body (1) and inner body (2). The Fig.4 and 5 shows an exemplary control knob (70) in which the outer body (1) includes (here: a plurality of) blocking means (4) and the inner body (2) includes corresponding slots (21) sized and shaped to cooperate with said blocking means (4).

Referring to Fig. 6, the coupling means (3) the exemplary first embodiment of the control knob (70) are shaped and sized to engage with and be guided by corresponding gaps (272) provided between adjacent teeth of the gear element (27) at the unlocked second position so that the outer body (1) and inner body (2) rotate together, when the outer body (1) is pushed and rotated. In mechanics, several sizes and shapes are available to arrange the above disclosed behavior, and therefore no size or shape is to be specified herein in order to avoid any undue limitation. An exemplary design to provide such behavior is shown in Fig 6, where the coupling means (3) and gaps (272) are at least partly in the shape of corresponding triangular prisms.

With reference to Fig.3, the inner body (2) the exemplary first embodiment of the control knob (70) further comprises an indicator (7) extending to a radial distance from the primary axis (A), said distance is equal to or greater than that between the primary axis (A) and the outer face (11) of the outer body (1). This feature enables the visibility of the indicator (7) from the outside of the control knob (70), and thus the rotational position of the inner body (2) respective to the cooking appliance (100) is rendered distinguishable for a user. The distance between the primary axis (A) and the indicator (7) can be greater than the distance between the primary axis (A) and the outer face of the outer body (1). Thereby momentary positions of the core can be manually indicated also by visually impaired users. Providing that the indicator (7) is manually accessible from outside of the outer body (1) is a matter of design, therefore undue limitations related to specific sizes and shapes are to be avoided. In an example according to this embodiment, the indicator (7) can be provided on a circumferential skirt part (26) secured to or provided integral with the inner body (2). The skirt part (26) at least partly surrounds the outer side face of the outer body (1).

Use of the exemplary first embodiment of the control knob (70) is performed by first visually and/or tactually detecting whether the indicator (7) of the control knob (70) indicates the correct status of the cooking appliance, when the control knob (70) is at the locked first position. If the indicator (7) does not indicate the correct status, rotating the outer body (1) relative to the inner body (2) around the primary axis (A) until the correct position is encountered. The coupling means (3) couple with corresponding gaps (272) of the gear element (27) and thereby the outer body (1) and inner body (2) are locked together, when the outer body (1) is pushed relative to the inner body (2) towards the control panel (40) and finally, the status of the cooking appliance (100), e.g. the power level of the heat source of the cooking appliance changes, when the control knob (70) is rotated around the primary axis (A) in the unlocked second position. The outer body (1) moves in a direction away from the control panel (40) by manipulating against force of the first spring element (5), after the pushing and rotation actions of the outer body (1) completed. The blocking protrusion (41) of the outer body (1) abuts to the wall (24) of the inner body (2) at an end position away from the control panel (40) and thus, the axial movement of the outer body (1) completed. The coupling means (3) disengage from the corresponding gaps (272) when the inner body (2) is at said end position and thereby, the control knob (70) is at the locked first position again. The numerous sequential steps of this procedure is complex to be achieved by young children, thereby the present invention provides the cooking appliance (100) with enhanced safety.

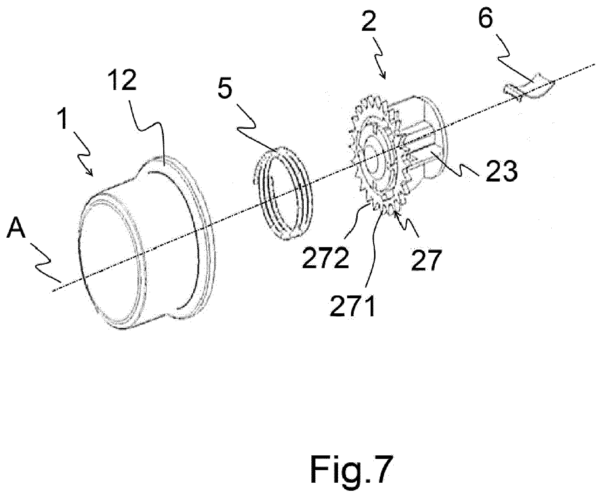

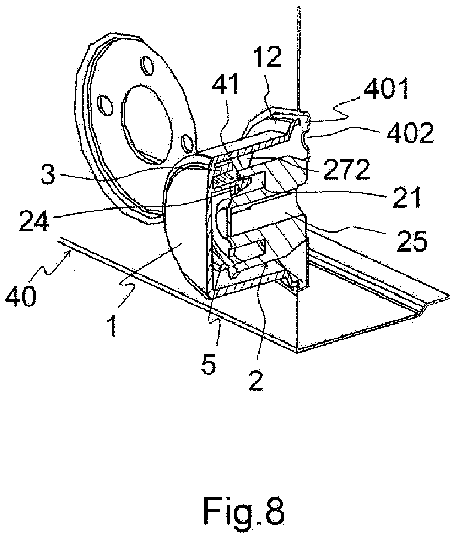

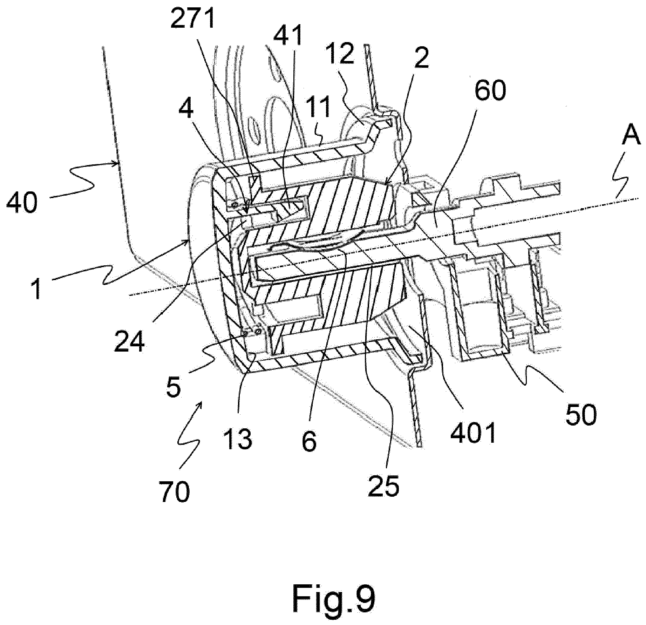

In an example according to second control knob (70) embodiment which is shown in Fig.7-9, comprises an essentially hollow outer body (1) having an inner face (13), and an inner body (2) which is at least partly positioned inside the outer body (1). The outer body (1) has a skirt (12) surrounding a primary axis (A). There is a gap provided between the skirt (12) and the control panel (40), when the control knob (70) is at a first locked position. The skirt (12) at least partly fills said gap, when the outer body (1) is pushed towards the control panel (40). Therefore, the inner body (2) can not seen from outside. There is a first spring element (5) provided between the outer body (1) and inner body (2). Both of the outer body (1) and inner body (2) are in communication with said first spring element (5) so that the outer body (1) is reversibly movable relative to the inner body (2) between the locked first position and an unlocked second position of the control knob (70) by manipulating against force of the first spring element (5). A second spring element (6) is positioned inside the inner body (2) for fixing the shaft (60) to the inner body (2) in a tightened manner. The inner face (13) of the outer body (1) is being provided with one or more coupling means (3) protruding towards the primary axis (A). In a possible embodiment, the outer body (1) has a hollow cylindrical shape and the coupling means (3) are embodied inside said outer body (1). In more details, the inner face and an outer face of the outer body (1) both surrounds the primary axis (A) and the control knob (70) is rotatable around said primary axis (A). The inner body (2) is being provided with a gear element (27) having a plurality of teeth (271) surrounding the primary axis (A). The gear element (27) of the inner body (2) is secured thereto or provided integral with the inner body (2). At least one support protrusion (23) extending so as to support the gear element (27) is provided on the inner body (2). Each coupling means (3) are shaped and sized to engage with and be guided by corresponding gaps (272) provided between adjacent teeth of the gear element (27) at the unlocked second position so that the outer body (1) and inner body (2) rotate together, when the outer body (1) is pushed and rotated. Said coupling means (3) disengage from the corresponding gaps (272) at the locked first position so that the outer body (1) is freely rotatable relative to the inner body (2). These set of feature enables engagement between the inner body (2) and outer body (1) in multiple rotational positions around the primary axis (A), thereby facilitating the push-to-engage function of the control knob (70). The set of features above provides multiple potential engagement positions between the outer body (1) and inner body (2), since the coupling means (3) and gaps (272) are aligned with each other for coupling and allowing transition between the locked first position and unlocked second position at a plurality of rotational positions relative to each other. The outer body (1) has one or more blocking means (4) embodied on the inner face of the outer body (1) so as to extend in a direction of the primary axis (A). In a possible embodiment of the invention, the outer body (1) has three coupling means (3) and three blocking means (4) protruding in the direction of the primary axis (A). Said blocking means (4) comprises at least one blocking protrusion (41) abutting a wall (24) of the inner body (2) at an end position in the direction away from the control panel (40). In more details, said blocking protrusions (41) of the outer body (1) are provided for blocking an axial movement of the outer body (1), when the outer body (1) moved in a direction away from the control panel (40). On the other hand, the inner body (2) has a shaft connection housing (25) and the second spring element (6) is positioned inside said shaft connection housing (25) for fixing the shaft (60) to the shaft connection housing (25) in a tightened manner. When the shaft (60) is placed into the shaft connection housing (25), the second spring element (6) provides the inner body (2) to be fixed onto the shaft (60). In other words, uncontrolled separation of the inner body (2) from the shaft (60) is prevented. The initial assembly between the inner body (2) and outer body (1) can be achieved via snap-fit connection through e.g. one or more blocking means-slot (4, 21) couples between the outer body (1) and inner body (2). The coupling means (3) are shaped and sized to engage with and be guided by corresponding gaps (272) provided between adjacent teeth of the gear element (27) at the unlocked second position so that the outer body (1) and inner body (2) rotate together, when the outer body (1) is pushed and rotated. In mechanics, several sizes and shapes are available to arrange the above disclosed behavior, and therefore no size or shape is to be specified herein in order to avoid any undue limitation. An exemplary design to provide such behavior is the coupling means (3) and gaps (272) are at least partly in the shape of corresponding triangular prisms. In a possible embodiment, the outer body (1) of the control knob (70) can has a protrusion and the inner body (2) can has a corresponding groove or reversibly, the outer body (1) can has a groove and the inner body (2) can has a corresponding protrusion (not shown in figures). Said protrusion and groove engages with each other at the correct status of the cooking appliance.

Use of the exemplary second embodiment of the control knob (70) can be performed by a tactile effect whether the protrusion and groove engages with each other at the correct status of the cooking appliance, when the control knob (70) is at the locked first position. If the protrusion and corresponding groove do not engage with each other the correct status, rotating the outer body (1) relative to the inner body (2) around the primary axis (A) until said protrusion and corresponding groove engage with each other. The coupling means (3) couple with corresponding gaps (272) of the gear element (27) and thereby the outer body (1) and inner body (2) are locked together, when the outer body (1) is pushed relative to the inner body (2) towards the control panel (40) and finally, the status of the cooking appliance (100), e.g. the power level of the heat source of the cooking appliance changes, when the control knob (70) is rotated around the primary axis (A) in the unlocked second position. The outer body (1) moves in a direction away from the control panel (40) by manipulating against force of the first spring element (5), after the pushing and rotation actions of the outer body (1) completed. The blocking protrusion (41) of the outer body (1) abuts to the wall (24) of the inner body (2) at an end position away from the control panel (40) and thus, the axial movement of the outer body (1) completed. The coupling means (3) disengage from the corresponding gaps (272) when the inner body (2) is at said end position and thereby, the control knob (70) is at the locked first position again. The numerous sequential steps of this procedure is complex to be achieved by young children, thereby the present invention provides the cooking appliance (100) with enhanced safety; and also easy to adult users by obtaining coupling between the inner body (2) and the outer body (1) at various circumferential positions around the primary axis (A).

### List of reference numbers

- 1.: Outer body
11. Outer face
12. Skirt
13. Inner face
- 2.: Inner body
21. Slot
22. Groove part
23. Support protrusion
24. Wall
25. Shaft connection housing
26. Skirt part
27. Gear element
271. Teeth
272. Gap
- 3.: Coupling means
- 4.: Blocking means
41. Blocking protrusion
- 5.: First spring element
- 6.: Second spring element
- 7.: Indicator
- 30.: Body
- 40.: Control panel
401. Groove
402. Hole
- 50.: Switch
- 60.: Shaft
- 70.: Control knob
- 100.: Cooking appliance
- A.: primary axis

## Claims

1. A cooking appliance (100) comprising a body (30), a control panel (40) provided on the body (30), a switch (50) for adjusting a power level of a heat source, the switch (50) comprising a shaft (60) extending through the control panel (40) and a control knob (70) connected to the shaft (60) for rotating the shaft, wherein said control knob (70) comprising an essentially hollow outer body (1) having an inner face, and an inner body (2) which is at least partly positioned inside the outer body (1) and wherein said outer body (1) is freely rotatable relative to the inner body (2) at a locked first position of the control knob (70), ***characterized in that*** the inner body (2) being provided with a gear element (27) having a plurality of teeth (271), the inner face of the outer body (1) being provided with one or more coupling means (3) and each coupling means (3) is shaped and sized to engage with and be guided by corresponding gaps provided between adjacent teeth of the gear element (27) at an unlocked second position so that the outer body (1) and inner body (2) rotate together, when the outer body (1) is pushed and rotated at a potential engaging position.

2. The cooking appliance (100) according to Claim 1, wherein a first spring element (5) is provided between the outer body (1) and inner body (2) so that the outer body (1) is reversibly movable relative to the inner body (2) between the locked first position and unlocked second position by manipulating against force of the first spring element (5).

3. The cooking appliance (100) according to the Claim 1 or 2, wherein the outer body (1) is provided with at least one blocking means (4) for blocking an axial movement of the outer body (1), when the outer body (1) moved in a direction away from the control panel (40).

4. The cooking appliance (100) according to the Claim 3, wherein the blocking means (4) is provided inside the outer body (1) and said blocking means (4) comprises at least one blocking protrusion (41) abutting a wall of the inner body (2) at an end position in the direction away from the control panel (40).

5. The cooking appliance (100) according to the Claim 3 or 4, wherein the inner body (2) has a slot (21), which corresponds with the blocking means (4) to rotate said blocking means (4) freely inside the slot (21), when the outer body (1) is rotated at the locked first position.

6. The cooking appliance (100) according to any one of the preceding claims, wherein the inner body (2) has a shaft connection housing (25) and wherein a second spring element (6) is positioned inside said shaft connection housing (25) for fixing the shaft (60) to the shaft connection housing (25) in a tightened manner.

7. The cooking appliance (100) according to any one of the preceding claims, wherein the control knob (70) that is rotatable around a primary axis (A), comprises an indicator (7) extending to a radial distance from said primary axis (A) and wherein said distance being equal to or greater than that between the primary axis (A) and an outer face of the outer body (1).

8. The cooking appliance (100) according to any one of the preceding claims, wherein the inner body (2) has a circumferential skirt part (26) secured to or integral with the inner body (2) and wherein the skirt part (26) at least partly surrounds the outer side face of the outer body (1).

9. The cooking appliance (100) according to Claim 8, wherein an indicator (7) is provided on an outer face of the skirt part (26) of the inner body (2).

10. The cooking appliance (100) according to any one of the claims 1-7, wherein the outer body (1) has a circumferential skirt (12) provided on an end of the outer body (1) and wherein said skirt (12) at least partly fills a gap between the outer body (1) and control panel (40), when the outer body (1) is pushed towards the control panel (40).
